# EUROPEAN PATENT SPECIFICATION

(11) **EP 1 338 533 B1**
(45) Date of publication and mention of the grant of the patent: **22.12.2004**
(21) Application number: 03075574.8
(22) Date of filing: 25.02.2003
(51) Int. Cl.: B65G 21/02

(54) **Conveyor frame**
Rahmen für Fördervorrichtung
Cadre pour transporteur

(30) Priority: 26.02.2002 EP 02075721
(43) Date of publication of application: 27.08.2003
(73) Proprietor: FPS Food Processing Systems B.V., 2631 RE Nootdorp (NL)
(72) Inventor: Van Wijngaarden, Erik, 7558 WL Hengelo (NL); Delfos, Tom, 2622 DD Delft (NL); Van den Berg, Wouter, 2272 HA Voorburg (NL)
(74) Representative: Prins, Adrianus Willem, Mr. Ir.

(56) References cited:
- DE-A- 19 741 663
- US-A- 4 982 835
- US-A- 5 370 218
- US-A1- 2002 008 000

## Description

The present invention relates to a conveying apparatus as indicated in the pre-characterising of the main claim.

Such an apparatus is known from US-A-4 736 835. Also known is an apparatus disclosed in US 3,739,904, which comprises a frame suitable for supporting a conveyor such as a single or double chain. In respect of the second exemplary embodiment, it is mentioned that only a limited number of types of basic parts are deemed to be adequate to build up such a frame. However, such a frame is suitable for just a single conveyor chain.

For building up frames suitable for mounting and supporting a series of conveyor chains, for instance up to a number of 12, the support or spacer element indicated is altogether inadequate. Moreover, for conveying apparatus such as sorting machines for fruit, such as apples or citrus fruits, it will be necessary to assemble a frame having great strength in both longitudinal and transverse direction.

To that end, the invention provides a conveying apparatus as defined above, characterized by the characterizing features of claim 1.

With great advantage, the frames can not only be built up with relatively few standard parts, but also, and especially so, such frames can be steplessly expanded using the very same parts, to any desired width. Such a standardization renders multiple molds redundant. Moreover, the non-circularly symmetrical cross sections offer a great strength and stability to the frames, and the effect of turning moments as a result of possible imbalance through vibrations and skew will be considerably reduced.

According to a further exemplary embodiment, the apparatus according to the invention is characterized in that the tangent line to the cross section of the longitudinal and transverse structural elements runs horizontally in at most two points thereof.

This means that these structural elements have a single highest and a single lowest point, having between these only, or substantially so, ascending/descending edges. A major advantage of this is that those material pieces can be kept clean very well, for instance by hosing them down, because they do not include any horizontal material surfaces on which detergent or dirt residues will be left behind. Moreover, products that are being conveyed with the conveyors but fall off *en route* will never be left behind on a horizontal surface. It is noted that the horizontal tangent lines mentioned permit notches but that, in view of the above, sharp slits and notches are undesirable. It is precisely the gradual upward/downward slope of the edges that improves the possibility of cleaning the elements and keeping them clean.

In further embodiments, the apparatus according to the invention is characterized in that the longitudinal structural elements, the transverse structural elements and the pillar elements have the same cross sectional circumference, that the cross section of the longitudinal and transverse structural elements is a square, while the tangent line to a line section of the cross section of the longitudinal or the transverse structural elements includes an angle of about 45° with the horizontal, and that the basic structural elements furthermore comprise a sleeve element fitting about the longitudinal structural elements, and with an outer rim therebetween, and furthermore fitting into a corresponding recess in said mounting blocks.

Further details and particulars of the invention will be elucidated with reference to the accompanying drawing, in which
Figure 1 is an isometric view of a frame according to the invention, and
Figure 2 is an isometric view of a detail of such a frame, with the elements shown disassembled.

In the figures, the same parts have been given the same numbers.

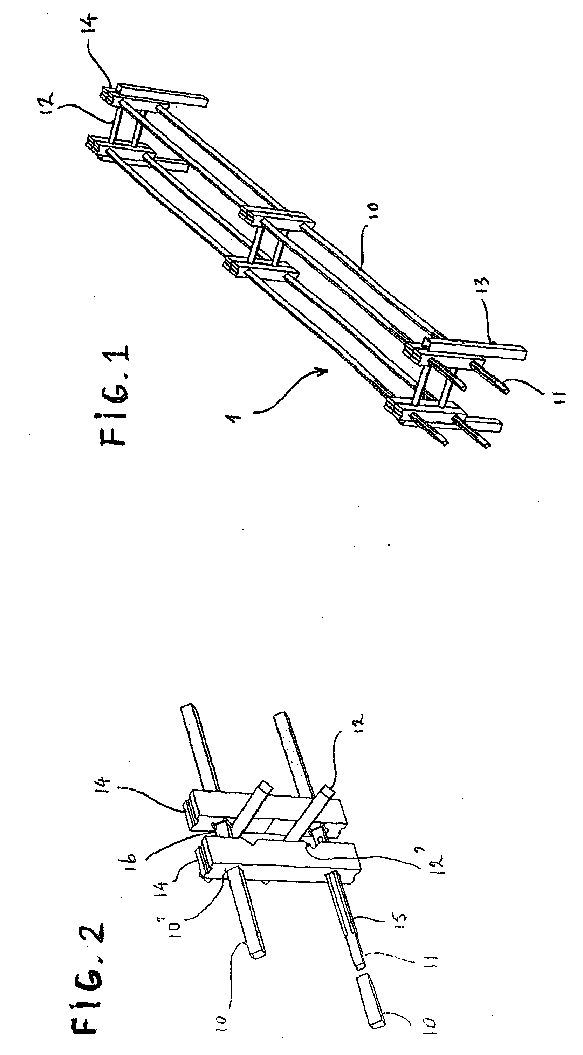

In Figs. 1 and 2, a frame 1 has been assembled from five main types of structural elements, viz. longitudinal structural elements 10, stabilizer elements 11, transverse structural elements 12, pillar elements 13, and mounting blocks 14.

The above-mentioned strength and stability are provided by the application of a square cross-sectional material circumference. The tubes are disposed at the above-mentioned angle of approximately 45°. The recesses required for that purpose in the mounting blocks are holes 10' and V-shaped notches 12'.

In Fig. 2 it is indicated how two blocks 14, to be regarded as halves for receiving transverse structural elements 12, at least clampingly embrace these elements after fixation. If necessary, further fixation of these elements 12 in the blocks 14 can take place. Blocks 14 and elements 13 can be fixed in any manner customary for a skilled person. For instance, the blocks 14 can be mutually fixed with, for instance, screw/nut connections, and the pillar elements 13 with the blocks 14 through hole/screw/nut connections. In general, a single type of block is provided, for instance as shown in Fig. 2. However, blocks with several recesses, viz. notches and holes, may be desirable for particular types of conveying apparatus and thus furnish greater strength and stability. It is further noted that the slots shown in Fig. 2 at the top and bottom of the blocks are not essential to the present invention. It will be clear to anyone skilled in the art that such top and bottom surfaces will be utilized for mounting chain frames or chain guides.

Of due importance is the choice of suitable materials: sufficiently strong, and properly cleanable. For instance, the blocks are made of plastic, such as polypropylene, and the tubes are made of stainless steel. For special applications, there are many other possibilities in this field of the art.

The shape of the mounting blocks will preferably be selected such that as great a symmetry as possible is obtained and the blocks can be used in several orientations. Preferably, the recesses, i.e. the holes 10' and the notches 12' are symmetrical with respect to a plane or axis.

To provide sufficient strength in the longitudinal direction, the stabilizer elements 11 can be fittingly slid into the longitudinal structural elements. To obtain more robustness and sealing, sleeve elements 15 of suitably chosen corresponding cross-sectional circumference can be used. These possess an outer rim 16, for instance halfway, of a circumference such that the ends of longitudinal structural elements 10 slid over them terminate on opposite sides of the rim 16 and this rim moreover fits into a recess intended for the purpose in each block 14. What is not indicated is that the sleeve elements can be so long that they can snap, by an inner edge, around the ends of a stabilizer element.

In a highly advantageous manner, the longitudinal and transverse structural elements 10, 12 will consist of the same tube material. A further highly advantageous possibility is to manufacture the pillar elements 13 from this same tube material as well. Supply, storage and use of such elements can thus be simplified considerably.

Standard lengths in this field of material supplies are, for instance, 6 m. In Fig. 1 it can be seen how, for instance, longitudinal structural elements 10 of a length of 6 m can be assembled to form modules of a length of 12 m, with blocks used at every 6 m, and pillar elements mounted after every 12 m. In the transverse direction, any desired width can be readily and advantageously chosen by utilizing parts of this 6 m. For the manufacture of sorting machines, for instance for fruit in packing stations, this is a major advantage because each station has different requirements and facilities. It specifically facilitates fitting them into spaces intended for the purpose.

In the exemplary embodiment represented, hollow tubes having a square cross-sectional circumference are used. It will be clear to anyone skilled in the art that many variants are possible. To be considered here, besides cross sections such as rectangles or hexagons, are H-shaped massive sections having substantially obtuse angles while avoiding the use of sharp notches. The shape of the mounting blocks will preferably be selected such that a highest possible symmetry is obtained and the blocks can be used in several orientations. For the sake of completeness, it is mentioned that generally the geometry of the cylindrical circumference mentioned is such that the cross section can be any possible curve, such as the H sections, square, hexagonal, and also oval.

It will be clear to anyone skilled in the art that small modifications of what has been mentioned and described above should be understood to fall within the scope of protection of the appended claims.

## Claims

1. A conveying apparatus comprising an endless conveyor and a frame (1) for mounting the conveyor thereon, the frame being comprised of basic structural elements which extend in substantially three directions, viz. length, width and height, and of fixing elements, such as screws and nuts,
the basic structural elements comprising four types :
- a longitudinal structural element,
- a transverse structural element (12),
- a pillar element (13), and
- a mounting block (14), for mounting and mutually positioning the longitudinal structural elements and the pillar elements,
wherein at least the longitudinal structural elements (10) and the transverse structural elements (12) are generally lengthwise extending cylindrical material pieces, for instance hollow tubes or massive tubes having a non-circular symmetrical cross section,
**characterized by**
a fifth type of structural element, the fifth type comprising:
- a stabilizer element (11), slidably fitting into at least two longitudinal structural elements (10) placed behind each other,
the mounting block (14) further being arranged for mounting and mutually positioning the longitudinal elements (10), the transverse elements (12) and the pillar elements (13), wherein the longitudinal and transverse structural elements fit with a close fit into corresponding recesses (10', 12') in the mounting blocks.

2. An apparatus according to claim 1, **characterized in that** a tangent line to said cross section of the longitudinal and transverse structural elements (10, 12) runs horizontally in at most two points thereof.

3. An apparatus according to claim 1 or 2, **characterized in that** the longitudinal structural elements (10), the transverse structural elements (12) and the pillar elements (13) have the same cross sectional circumference.

4. An apparatus according to claim 1 or 2, **characterized in that** the cross section of the longitudinal and transverse structural elements (10, 12) is a square, while a tangent line to a line section of the cross section of the longitudinal or the transverse structural elements includes an angle of approximately 45° with the horizontal.

5. An apparatus according to any one of the preceding claims,
**characterized in that**
the basic structural elements further comprise a sleeve element (15), fitting about the longitudinal structural elements, and with an outer im therebetween, and furthermore fitting into a corresponding recess (10') in said mounting blocks.

## Patentansprüche

1. Fördervorrichtung, aufweisend einen Endlosförderer und einen Rahmen (1) zum Befestigen des Förderers auf diesen, bei dem der Rahmen aus Grundstrukturelementen, welche sich im wesentlichen in drei Richtungen, nämlich Länge, Breite und Höhe, erstrecken und aus Befestigungselementen, wie Schrauben und Schraubenmuttern, bestehen, wobei
die Grundstrukturlemente vier Typen aufweisen:
- ein längslaufendes Strukturelement (10),
- ein querlaufendes Strukturelement (12),
- ein Pfostenelement (13), und
- ein Befestigungsblock (14) zum Befestigen und wechselseitigen Einstellen der längslaufenden Strukturelemente und der Pfostenelemente,
wobei zumindest die längslaufenden Strukturelemente (10) und die querlaufenden Strukturelemente (12) sich im wesentlichen der Länge nach erstreckende, zylindrische Materialtelle sind, beispielsweise Hohlröhren oder massive Röhren mit einem nicht runden symmetrischen Querschnitt,
**gekennzeichnet durch**
einen fünften Typ eines Strukturelements, wobei der fünfte Typ aufweist:
- ein Stabflisationslement (11), verschiebbar in zumindest zwei hintereinander platzierte längslaufende Strukturelemente (10) passend,
wobei der Befestigungsblock (14) weiterhin zum Befestigen und wechselseitigen Einstellen der längslaufenden Strukturelemente (10), der querlaufenden Strukturelemente (12) und der Pfostenelemente (13) angeordnet ist und wobei die längslaufenden und querlaufenden Strukturelemente mit einer engen Passung in die entsprechenden Aussparungen (10', 12') in den Befestigungsblöcken passen.

2. Vorrichtung nach Anspruch 1, **dadurch gekennzeichnet, daß** eine an dem Querschnitt der längslaufenden und querlaufenden Strukturelemente (10, 12) angelegte Tangente horizontal durch höchstens zwei Punkte von diesen verläuft.

3. Vorrichtung nach Anspruch 1 oder 2, **dadurch gekennzeichnet, daß** die längslaufenden Strukturelemente (10), die querlaufenden Strukturlemente (12) und die Pfostenelemente (13) die gleichen Querschnittsumfänge besitzen.

4. Vorrichtung nach Anspruch 1 oder 2, **dadurch gekennzeichnet, daß** der Querschnitt der längslaufenden und querlaufenden Strukturelemente (10, 12) viereckig ist, während eine an einem Abschnitt des Querschnitts der längslaufenden und querlaufenden Strukturelemente angelegte Tangente einen Winkel von ungefähr 45° zu der Horizontalen besitzt.

5. Vorrichtung nach einem der vorherigen Ansprüche, **dadurch gekennzeichnet, daß** die Grundstrukturelemente weiterhin ein um das längslaufende Strukturelement passende Hülsenelement (15) aufweisen, mit einem äußeren Rand dazwischen und weiterhin in eine entsprechende Aussparung (10') in den Befestigungsblöcken passend.

## Revendications

1. Dispositif de convoyage comprenant un convoyeur sans fin et un châssis (1) pour monter le convoyeur dessus, le châssis étant composé d'éléments de structure de base qui s'étendent substantiellement dans trois directions, à savoir en longueur, en largeur et en hauteur, et d'éléments de fixation, tels que des vis et des écrous, les éléments de structure de base comprenant quatre types d'élément :
- un élément de structure longitudinal (10),
- un élément de structure transversal (12),
- un élément de pilier (13) et,
- un bloc de montage (14), pour monter et positionner mutuellement les éléments de structure longitudinaux et les éléments de pilier,
dans lequel au moins les éléments de structure longitudinaux (10) et les éléments de structure transversaux (12) sont de manière générale, des pièces de matériau cylindrique s'étendant en direction de la longueur, par exemple des tubes creux ou des tubes massifs ayant une section transversale symétrique non circulaire,
**caractérisé par** un cinquième type d'élément de structure, le cinquième type comprenant :
- un élément stabiliseur (11), agencé de façon coulissante dans au moins deux éléments de structure longitudinaux (10) placés l'un derrière l'autre,
le bloc de montage (14) étant en outre agencé pour monter et positionner mutuellement les éléments longitudinaux (10), les éléments transversaux (12) et les éléments de pilier (13), dans lequel les éléments de structure transversaux et longitudinaux sont emboîtés avec un emboîtement jointif à l'intérieur de cavités correspondantes (10', 12') dans les blocs de montage.

2. Dispositif selon la revendication 1,
**caractérisé en ce qu'**une ligne tangente à ladite section transversale des éléments de structure transversaux et longitudinaux (10, 12) s'étend horizontalement en au plus deux points de ces derniers.

3. Dispositif selon la revendication 1 ou 2,
**caractérisé en ce que** les éléments de structure longitudinaux (10), les éléments de structure transversaux (12) et les éléments de pilier (13) ont la même circonférence de section transversale.

4. Dispositif selon la revendication 1 ou 2,
**caractérisé en ce que** la section transversale des éléments de structure transversaux et longitudinaux (10, 12) est un carré, tandis qu'une ligne tangente à une portion linéaire de la section transversale des éléments de structure transversaux ou longitudinaux comporte un angle d'environ 45° par rapport à l'horizontale.

5. Dispositif selon l'une quelconque des revendications précédentes,
**caractérisé en ce que** les éléments de structure de base comprennent en outre un élément de manchon (15) s'emboîtant au niveau des éléments de structure longitudinaux, avec un pourtour extérieur entre eux, et s'emboîtant en outre à l'intérieur d'une cavité correspondante (10') dans lesdits blocs de montage.
